# EUROPEAN PATENT SPECIFICATION

(11) **EP 4 357 069 B1**
(45) Date of publication and mention of the grant of the patent: **01.04.2026**
(21) Application number: 22827014.6
(22) Date of filing: 24.02.2022
(51) Int. Cl.: B23P 19/06, B25J 11/00, B25J 15/04, B25B 23/00, H02G 1/02, B62D 57/024

(54) **BOLT RETIGHTENING DEVICE AND CLIMBING ROBOT USING SAME**
BOLZENRÜCKZUGSVORRICHTUNG UND KLETTERROBOTER DAMIT
DISPOSITIF DE RESSERRAGE DE BOULON ET ROBOT GRIMPEUR L'UTILISANT

(30) Priority: 21.06.2021 CN 202110685935; 21.06.2021 CN 202121383696 U
(43) Date of publication of application: 24.04.2024
(73) Proprietor: State Grid Anhui Electric Power Co., Ltd., Hefei, Anhui 230061 (CN); State Grid Fuyang Electric Power Supply Company, Fuyang, Anhui Province 236000 (CN)
(72) Inventor: ZHANG, Jinfeng, Hefei, Anhui 230061 (CN); LIU, Jun, Hefei, Anhui 230061 (CN); CHENG, Zhiyu, Hefei, Anhui 230061 (CN); SUN, Lei, Hefei, Anhui 230022 (CN); GONG, Zhiwen, Hefei, Anhui 230088 (CN); SUN, Bingyu, Hefei, Anhui 230022 (CN); ZHANG, Tianzhong, Hefei, Anhui 230061 (CN); WANG, Shenghe, Hefei, Anhui 230061 (CN); LUO, Yihua, Hefei, Anhui 230061 (CN); HUANG, Jie, Hefei, Anhui 230061 (CN); LIU, Daping, Hefei, Anhui 230061 (CN); LIU, Yong, Hefei, Anhui 230061 (CN); LIU, Chengzhi, Hefei, Anhui 230061 (CN); WANG, Daojing, Hefei, Anhui 230061 (CN); YAO, Lanbo, Hefei, Anhui 230061 (CN); GUO, Xingyuan, Laian Town Chuzhou, Anhui 230088 (CN)
(74) Representative: Michalski Hüttermann & Partner Patentanwälte mbB
(86) International application number: PCT/CN2022/077729
(87) International publication number: WO 2022/267507

(56) References cited:
- CN-A- 105 390 991
- CN-A- 106 737 872
- CN-A- 109 698 475
- CN-A- 109 698 475
- CN-A- 112 873 217
- CN-A- 112 873 217
- CN-A- 113 500 382
- CN-A- 113 500 383
- CN-A- 113 649 796
- CN-U- 207 983 328
- JP-A- H05 236 619
- US-A1- 2018 304 423
- US-B2- 7 089 826

## Description

### TECHNICAL FIELD

The present disclosure belongs to the technical field of climbing robots for electric power operations, and particularly relates to a bolt retightening device and a climbing robot using the bolt retightening device.

### BACKGROUND

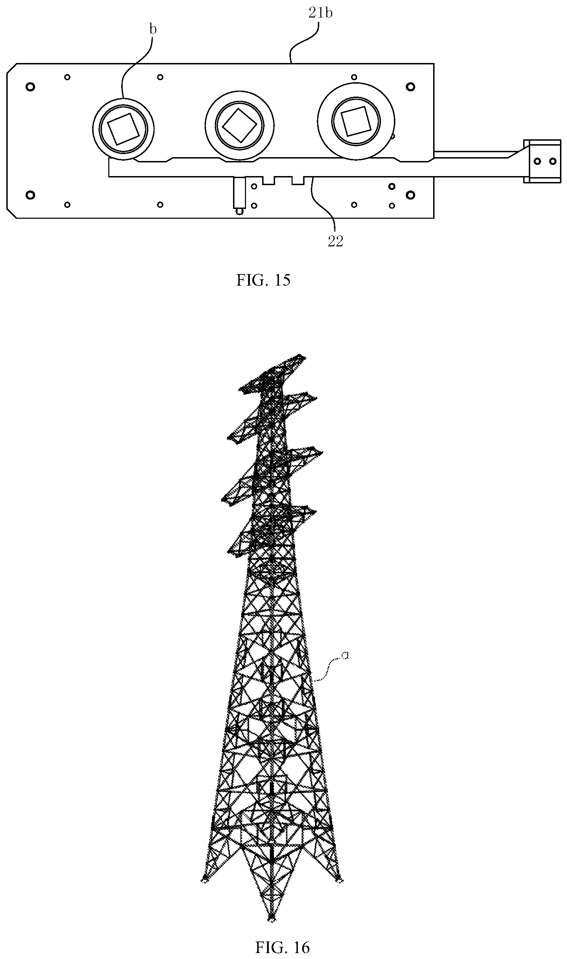

The stability and safety of electric power are of great importance to promote development of various industries. In China, electric angle steel towers shown in FIG. 16 are widely distributed, and are long exposed in field environments or even hostile environments with heavy dust, strong wind and high humidity. During maintenance of an electric angle steel towers, an operator needs to work at heights, and retighten and stabilize connecting bolts. This process has a high danger coefficient, high labor intensity, and a long idle time, which can easily cause physical exhaustion of the operator and further endanger the operator's physical health. Besides, this process is obviously extremely inefficient. Therefore, in recent years, it is urgent to develop a climbing robot for the electric angle steel towers or other high-altitude operations to retighten the bolts in high-altitude environments.

CN 112873217 A describes an angle steel tower bolt fastening robot, comprising: a robot frame, an intermediate mechanism and a clamping mechanism connected to the robot frame via the intermediate mechanism, wherein the robot frame includes a fastening tool, a rail, a forefoot moving crossbar and a hindfoot moving crossbar arranged perpendicularly to the rail, and a middle moving crossbar arranged perpendicularly to the rail and between the forefoot moving crossbar and the hindfoot moving crossbar; the forefoot moving crossbar, the hindfoot moving crossbar and the middle moving crossbar move up and down along the rail, and the fastening tool is fixed to the middle moving crossbar; the intermediate mechanism includes an annular guide rail and an inclination electric push rod connected to the annular guide rail, the annular guide rail is connected perpendicularly to an axis of the robot frame, the robot frame rotates along the circular guide rail, and the inclination electric push rod is supported by a supporting assembly to drive the robot frame away from or close to an angle steel. CN 109 698 475 A describes a live-line maintenance robot that travels on overhead high-voltage conductors, crosses obstacles, and performs multi-line work without coming down. The system pairs a mobile carrier (T-shaped frame, coaxial drive wheels, conductive clamping rollers, and an auxiliary wheel) with a hybrid-coordinate manipulator using a torsion joint, pitch link, two stages of transverse linear slides, and a rotating end platform that holds a U-shaped tool for tasks like bolt tightening. Designed to expand workspace while keeping weight low, it can be reconfigured for single, double (horizontal/vertical), four- and six-bundle conductors, enabling one deployment to service multiple spans more safely and efficiently.

### SUMMARY

In view of defects in the prior art, an objective of the present disclosure is to provide a bolt retightening device, which can be mounted on a main machine of a conventional climbing robot, replacing manual labor, to implement the high-altitude operation accurately and efficiently. Another objective of the present disclosure is to provide a preferred climbing robot equipped with the bolt retightening device, which can better achieve the function of on-line replacement of sockets during a high-altitude operation while ensuring safety construction, thereby ultimately greatly saving manual inspection costs, improving the maintenance efficiency, and guaranteeing safe and reliable operation of the power transmission system.

The invention is defined by the features of the independent claim 1

To achieve the above objective, the present disclosure adopts the following technical solutions:
A bolt retightening device includes an extension arm and a working head fixed to the extension arm, wherein the extension arm includes a bottom frame fixed to a main machine, and the bottom frame is mounted with a rotation assembly for driving the working head to rotate and a plane displacement assembly for driving the working head to perform a specified point operation;
the rotation assembly includes a rotating base rotatably arranged on the bottom frame, and a rotation axis of the rotating base is perpendicular to a length direction of a main angle steel material; the rotation axis is located on a symmetry plane of the main angle steel material, on which a ridge of the main angle steel material is also located; and the rotating base is driven by a rotary power source to perform a specific action;
the plane displacement assembly includes an X-axis displacement mechanism and a Y-axis displacement mechanism whose displacement directions are perpendicular to each other; the X-axis displacement mechanism includes an X-axis frame and an X-axis movable component capable of reciprocating linearly along a length direction of the X-axis frame, a reciprocating direction of the X-axis movable component is formed into an included angle of 45° with the rotation axis of the rotating base, and an opening of the included angle faces toward a direction where the main angle steel material is located; the Y-axis displacement mechanism includes a Y-axis frame and a Y-axis movable component capable of reciprocating linearly along a length direction of the Y-axis frame, and the Y-axis frame is fixedly connected with the X-axis movable component; and
the working head includes a striking seat, and a striking anchor rod provided at a head end of the striking seat and configured to locate and rotate a socket, an outer contour of a head end of the striking anchor rod corresponds to an outer contour of a preset detaching hole of the socket, the head end of the striking anchor rod is in a removable flexible snap or threaded fit with the detaching hole; the striking seat is fixed to the Y-axis movable component, and a striking motor is provided in the striking component, thereby the striking anchor rod is driven to rotate around an axis of the socket.

Preferably, the head end of the striking anchor rod has a shape of a tetragonal prism corresponding to the outer contour of the detaching hole, a locating pin hole is recessed in a side wall of the head end, and the locating pin hole is provided therein with an eject pin which is capable of extending or retracting flexibly along a radial direction of the striking anchor rod, so that the eject pin is in a removable snap fit with a hole in a wall of the detaching hole.

Preferably, an X-axis screw rod is rotatably provided on the X-axis frame, and the X-axis screw rod is provided with the X-axis movable component in a screw-thread fit; a Y-axis screw rod is rotatably provided on the Y-axis frame, and the Y-axis screw rod is provided with the Y-axis movable component in a screw-thread fit; and the X-axis screw rod and the Y-axis screw rod each are driven by a synchronous motor to rotate respectively.

Preferably, the rotary power source is a rotating motor; and the rotating base is rotatably provided on a locating support of the bottom frame, and cooperated with a worm at an output shaft of the rotating motor through a worm gear for power transmission.

Preferably, a climbing robot using the bolt retightening device includes the main machine and a walking unit driven by the main machine to move up and down along the main angle steel material, wherein the main machine is further provided with an auxiliary socket replacement box which cooperates with the working head for a high-altitude socket replacement operation, and the auxiliary socket replacement box and the bolt retightening device are fixed to a head end of the main machine; the auxiliary socket replacement box includes a box body which is provided with accommodation holes into which respective sockets can be put, there are two or more of the accommodation holes that are arranged sequentially along a given direction; the auxiliary socket replacement box further includes an unlocking pull rod having a length direction parallel to radial directions of the accommodation holes, the box body is provided at a side of the accommodation holes with a guiding track or a guiding cavity communicating with the accommodation holes, and the unlocking pull rod is located in the guiding cavity or on the guiding track and thus can reciprocate along an arrangement direction of the accommodation holes; the auxiliary socket replacement box further includes a power source for driving the unlocking pull rod to reciprocate along the arrangement direction of the accommodation holes, a side of the unlocking pull rod facing toward cavities of the accommodation holes is convexly provided with limiting protrusions, and the limiting protrusions are extended into the cavities of the accommodation holes and are in a spigot fit with preset locating grooves of the sockets to prevent the sockets from moving upward; and when the unlocking pull rod reciprocates, only one of the limiting protrusions and a corresponding locating groove can be separated from each other at the same time, thereby unlocking the socket corresponding to the locating groove.

Preferably, the box body is of a rectangular shape, the accommodation holes are arranged sequentially and uniformly along a length direction of the box body, the unlocking pull rod is a rectangular rod and is intersected with the cavities of the accommodation holes, and the unlocking pull rod is provided with arc avoidance notches corresponding to the sockets for allowing the sockets to move upward; and along the length direction of the unlocking pull rod, areas between adjacent ones of the arc avoidance notches may be formed into the limiting protrusions, and widths of the limiting protrusions may be increased sequentially or decreased sequentially, so as to ensure that only one of the limiting protrusions and the corresponding locating groove can be separated from each other at the same time.

Preferably, the box body includes a rectangular box-like housing and a mounting base plate in the housing, the mounting base plate is arranged horizontally to separate a cavity of the housing into an upper cavity and a lower cavity, a cover of the housing is provided with mounting holes penetrating through the cover of the housing, walls of the mounting holes serve as walls of the accommodation holes, and an upper surface of the mounting base plate serve as a bottom of each of the accommodation holes, such that the accommodation holes are finally formed as counterbored holes; and the unlocking pull rod is extended inside the upper cavity, and is in a spigot fit with the sockets in the respective accommodation holes.

Preferably, the power source is an electric push rod, the power source is fixed to a lower surface of the mounting base plate, and a telescopic shaft of the power source and a power end of the unlocking pull rod are fixedly connected with each other through a connecting member.

Preferably, the box body is of a cylindrical shape, the accommodation holes are arranged sequentially and uniformly along a circumferential direction of the box body, the unlocking pull rod may be a C-shaped rod or a circular rod and is intersected with the cavities of the accommodation holes, and an inner side of the unlocking pull rod is provided with arc avoidance notches corresponding to the sockets for allowing the sockets to move upward; and along the circumferential direction of the unlocking pull rod, areas between adjacent arc avoidance notches are formed into the limiting protrusions, and widths of the respective limiting protrusions may be increased sequentially or decreased sequentially, so as to ensure that only one of the limiting protrusions and the corresponding locating groove can be separated from each other at the same time.

Preferably, the unlocking pull rod is provided with sensing points, a number of the sensing points corresponds to a number of the sockets, and a distance between the sensing points may be the same as that between adjacent ones of the sockets; and a photoelectric switch for monitoring positions of the sensing points is provided in the box body, and a sensing surface of the photoelectric switch is located on a displacement path of the sensing points.

The present disclosure has the following beneficial effects:
1) For various bolts of different types on an electric angle steel tower, how to implement the on-line socket replacement operation has become a problem obviously. The climbing robot has undesirable cost performance if a socket of a different type is carried each time.

In view of this, the present disclosure provides a bolt retightening device that can be provided on the main machine of a conventional climbing robot. The position of the working head is located through cooperation between the rotation assembly and the plane displacement assembly, and then retightening of a bolt at any point can be achieved through the striking motor of the working head. Whenever a different type of a bolt is needed to be retightened, a socket at the striking anchor rod of the working head can be replaced on-line easily, thereby implementing convenient and efficient operation. It is to be noted that the rotation axis of the rotation assembly is located on the symmetry plane on which the ridge of the main angle steel material is also located, which ensures that the X-axis displacement mechanism having the included angle of 45° with the rotation axis can move horizontally along an outer wall surface of the main angle steel material all the time. Besides, the Y-axis displacement mechanism ensures that the working head gets close to or away from a bolt to be retightened. Therefore, both the controllability and the working accuracy can be guaranteed effectively.

It can be seen from the above that, on one hand, the bolt retightening device is multi-functional and is applied in bolt retightening occasions of various electric angle steel towers, and on the other hand, under the driving of the extension arm, operation of the working head to a specified point is highly accurate and reliable. Therefore, the bolt retightening device can be used as a replacement of manual labor to implement the high-altitude operation accurately and efficiently.

2) Another objective of the present disclosure is to provide a preferred climbing robot equipped with the above bolt retightening device, which can better achieve the function of on-line replacement of sockets during a high-altitude operation while ensuring safety construction, thereby greatly saving the manual inspection costs, improving the maintenance efficiency, and guaranteeing safe and reliable operation of the power transmission system.

Specifically, in view of the special high-altitude remote-control environment of an electric angle steel tower, objects falling accidentally from the high altitude are extremely dangerous, and thus the safety in operation is crucial. When a working head has a detachable structure and the working head is assembled with a socket on the ground, the safety is ensured, although the working efficiency cannot be maximized. The present disclosure uses the special assembly at high altitude instead of on the ground. Besides, with the locking feature of the unlocking pull rod on the sockets in the accommodation holes, it can be ensured that only one socket is unlocked at a time, and the unlocked socket is exactly required for the working head. Therefore, in an actual operation, the bolt retightening device of the present disclosure can be completely adapted to an existing climbing robot, and the existing climbing robot with the working head having a detachable structure ensures safety construction, implements the on-line socket replacement function in the high-altitude operation, and maximizes the working efficiency.

3) In an actual assembly, the unlocking pull rod can be viewed as a lock tongue. Through locking or unlocking between the lock tongue and the locating groove of a socket, the socket in a specific accommodation hole can or cannot be taken out. Based on the above concept, the present disclosure provides the following two specific embodiments:

i. The box body is of a rectangular shape, and cooperates with a rectangular unlocking pull rod. During operation, with a linear displacement action of the unlocking pull rod along the length direction of the box body, the sockets can be locked or unlocked depending on positions of the limiting protrusions or the arc avoidance notches of the unlocking pull rod relative to the locating grooves. When the unlocking pull rod is needed to move linearly, the power source can be a linear-stroke power unit such as a linear motor or an electric push rod to realize the in-line driving of the unlocking pull rod.

ii. The box body is of the cylindrical shape, and cooperates with the C-shaped or circular unlocking pull rod. During operation, with rotation of the unlocking pull rod along the circumferential direction of the box body, the sockets can be locked or unlocked depending on positions of the upper limiting protrusions or the arc avoidance notches of the unlocking pull rod relative to the locating grooves. When the unlocking pull rod is needed to rotate along the circumference of the box body, a rotating motor coaxial with the unlocking pull rod can be used to directly drive the unlocking pull rod. Alternatively, a side of the unlocking pull rod is also provided with a rack which is in a meshing fit with a driving gear of the rotating motor. When a swing arm motor, such as a servo, is used, it can be directly articulated for a power transmission purpose, which is not repeated here.

4) In actual operation, because the high-altitude remote control operation is needed, it is necessary to add a sensing component in the present disclosure to realize on-line sensing the position of the unlocking pull rod, so as to determine which socket is unlocked at present. In the present disclosure, the sensing points are cooperated with the photoelectric switch, so that the structure is simple and clear, more compact and reasonable, and is conducive to the use in the high-altitude environment.

### BRIEF DESCRIPTION OF THE DRAWINGS

FIG. 1 is a schematic view of an assembled bolt retightening device;
FIG. 2 is a structural schematic view of a bolt retightening device;
FIG. 3 is a stereoscopic view of a rotation assembly;
FIG. 4 is an exploded assembly view of the structure in FIG. 3;
FIG. 5 is a stereoscopic view of an X-axis displacement mechanism;
FIG. 6 is an exploded assembly view of the structure in FIG. 5;
FIG. 7 is a stereoscopic assembly view of a Y-axis displacement mechanism and a working head;
FIG. 8 is an exploded assembly view of the structure in FIG. 7;
FIG. 9 is an exploded assembly view of a working head;
FIG. 10 is a view of an auxiliary socket replacement box in work;
FIG. 11 is a front view of the structure in FIG. 10 after a housing is removed;
FIG. 12 is a top view of FIG. 11;
FIG. 13 is a stereoscopic view of FIG. 11;
FIG. 14 and FIG. 15 each are a flowchart of an action of an unlocking pull rod; and
FIG. 16 is a structural schematic view of an electric angle steel tower.

### Reference numerals:

a-main angle steel material, b-socket, b1-locating groove, b2-detaching hole, 11-extension arm, 111-bottom frame, 112-rotation assembly, 112a-rotating base, 112b-rotating motor, 113-X-axis displacement mechanism, 113a-X-axis frame, 113b-X-axis movable component, 113c-X-axis screw rod, 114-Y-axis displacement mechanism, 114a-Y-axis frame, 114b-Y-axis movable component, 114c-Y-axis screw rod, 115-synchronous motor, 12-working head, 12a-striking seat, 12b-striking anchor rod, 12c-eject pin, 12d-striking motor, 21-box body, 211-accommodation hole, 21a-housing, 21b-mounting base plate, 22-unlocking pull rod, 22a-arc avoidance notch, 22b-sensing point, 23-power source, 24-connecting member, 25-photoelectric switch, 30-main machine, and 40-walking unit.

### DETAILED DESCRIPTION

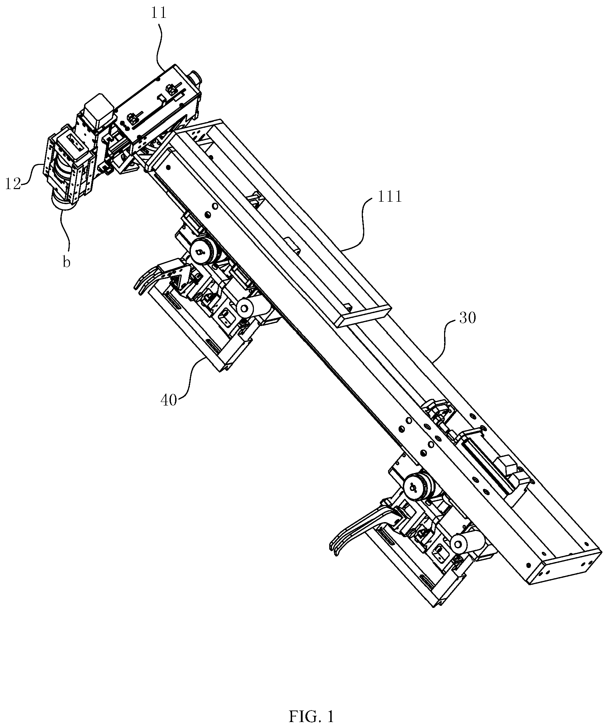

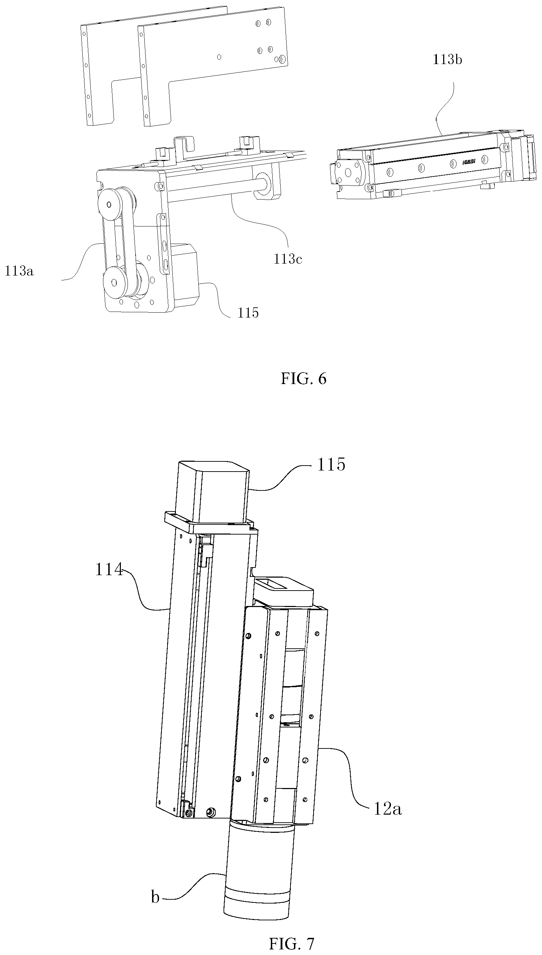

For ease of understanding, the specific structure and working mode of the climbing robot of the present disclosure are further described below in combination with FIGS. 1-16.

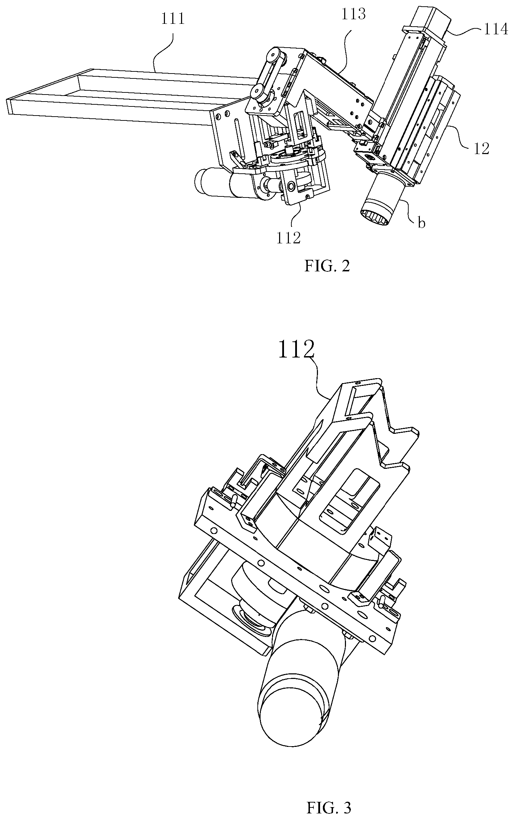

The specific structure of the climbing robot of the present disclosure is as illustrated in FIG. 2. The climbing robot includes a main machine 30 having a walking unit 40 and a working suite on the main machine 30. The main machine serves as a carrier body of the working suite to achieve climbing upward and walking downward on the electric angle steel tower shown in FIG. 16. The working suite includes an auxiliary socket replacement box and a bolt retightening device. The bolt retightening device comprises an extension arm 11 and a working head 12 that are cooperated with each other so that as to realize the on-line retightening function of the working suite for bolts on main angle steel materials *a* of the electric angle steel tower at four corners and bolts in peripheral areas. The auxiliary socket replacement box is an auxiliary device based on the bolt retightening device. As known, there are more than one type of bolts and nuts used for fixing on the electric angle steel tower, so when the bolts are retightened, it may be necessary to replace the socket at any time at different moments, and then the auxiliary socket replacement box is designed. In the figures:

### Main machine:

FIG. 1 illustrates a schematic view of the main machine 30, the walking unit 40 and the working suite that are assembled. It can be seen from FIG. 1 that the main machine 30 and the walking unit 40 each may be an existing commercially available and common inchworm robot or wheeled robot or the like, as long as they can achieve the goal of work after the working suite is mounted. Certainly, it is also possible to only provide the bolt retightening device, if necessary, and the socket is needed to be replaced each time, it is necessary to assemble and disassemble the socket on the ground, and the efficiency is obviously lower than that in the case where the auxiliary socket replacement box is provided together.

### Bolt retightening device:

FIGS. 2-9 illustrate a structure of the bolt retightening device. It can be seen from the figures, the bolt retightening device includes a bottom frame 111, a rotation assembly 112, a plane displacement assembly and a working head 12 that are assembled sequentially.

As shown in FIG. 2, the bottom frame 111 is configured as a common fixing frame for the purpose of connecting the rotation assembly 112 with a head end of the main machine 30, which is not repeated here. Referring to FIGS. 2-3, the rotation assembly 112 employs a worm gear transmission pair to achieve power transmission from a rotating motor 112b to a rotating base 112a, thereby implementing rotation of the rotating base 112a whose rotation axis of is located on a symmetry plane on which a ridge of a current main angle steel material is located. In other words, only when the rotation assembly 112 starts to work, the swing angle of the working head 12 at a left side of the main angle steel material is the same as that at a right side of the main angle steel material, so as to implement reference location and provide a basic guarantee for the working head to subsequently retighten the bolt at a specified point.

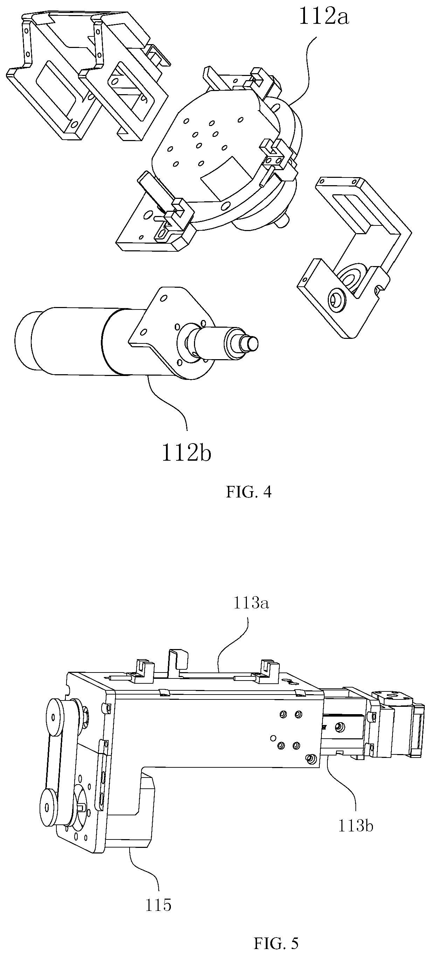

On the basis of the above structure, as shown in FIGS. 5-8, the plane displacement assembly composed of an X-axis displacement mechanism 113 and a Y-axis displacement mechanism 114 is provided. The X-axis displacement mechanism 113 and the Y-axis displacement mechanism 114 are driven by respective synchronous motors 115.

In assembly, the X-axis displacement mechanism 113 includes an X-axis frame 113a and an X-axis screw rod 113c rotatably provided on the X-axis frame 113a. The X-axis screw rod 113c is further provided with an X-axis movable component 113b which can be linearly extended or retracted along a direction formed into an angle of 45° with a rotation axis of the rotating base 112a. The main angle steel material is a 90° angle steel, and the rotation axis of the rotating base 112a is located on the symmetry plane of the main angle steel material on which the ridge of the main angle steel material is located. As a result, an axial reciprocating direction of the X-axis movable component 113b is substantially parallel to a side wall of the main angle steel material, which not only ensures the accurate location of the working head 12 relative to the bolts, but also prevents the influence of the main angle steel material on the working head 12. Similar to the X-axis displacement mechanism 113, the Y-axis displacement mechanism 114 also includes a Y-axis frame 114a, a Y-axis screw rod 114c and a Y-axis movable component 114b. The Y-axis frame 114a is fixed to the X-axis movable component 113b, which ensures that a striking component 12a fixed to the Y-axis movable component 114b travels linearly.

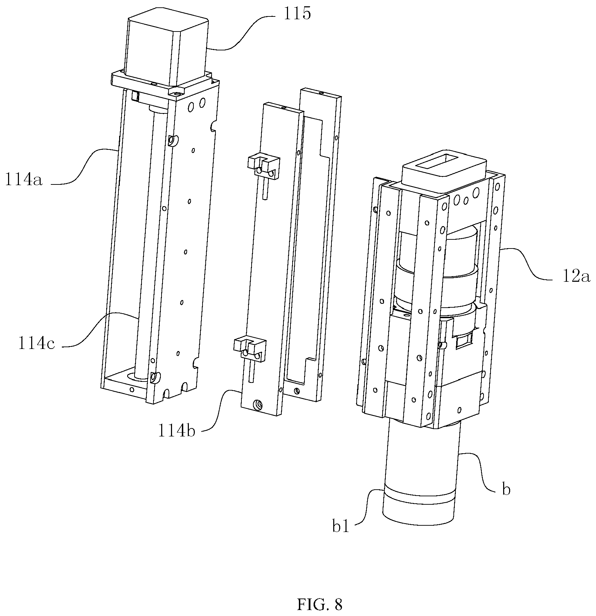

Referring to FIGS. 8-9, the working head 12 substantially rotates a socket on a striking anchor rod 12b through a striking motor 12d which is coaxial with the working head 12 and a striking anchor rid 12b at an output shaft of the striking motor 12d. The rotation action of a socket b plays a role of a socket wrench, so that a bolt in a socket cavity of the socket b is driven to be retightened. The socket is sleeved on or off the bolt by means of the Y-axis displacement mechanism 114. Relative positions of the socket and the bolt can be determined accurately through the collaboration of the rotation assembly 112 and the X-axis displacement mechanism 113.

### Auxiliary socket replacement box:

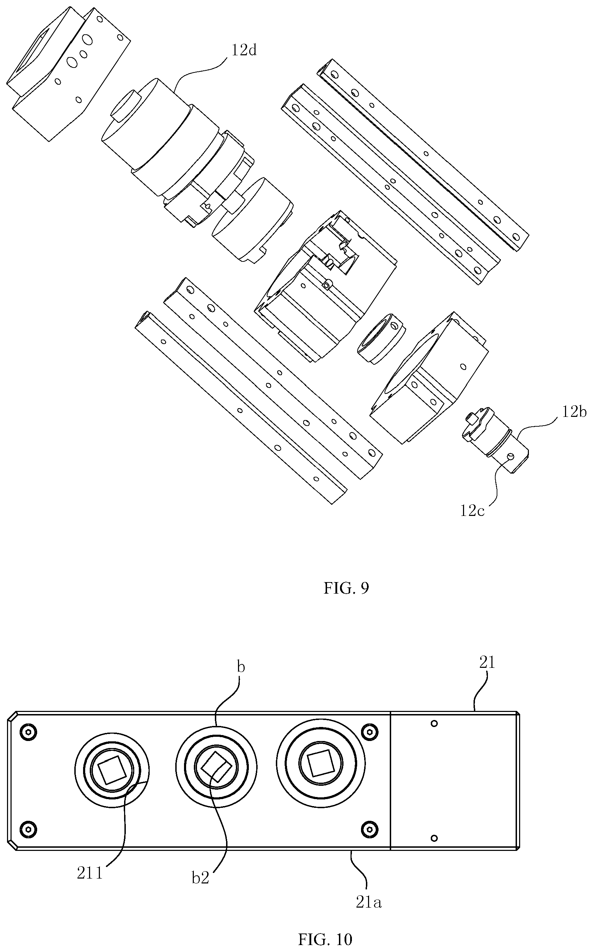

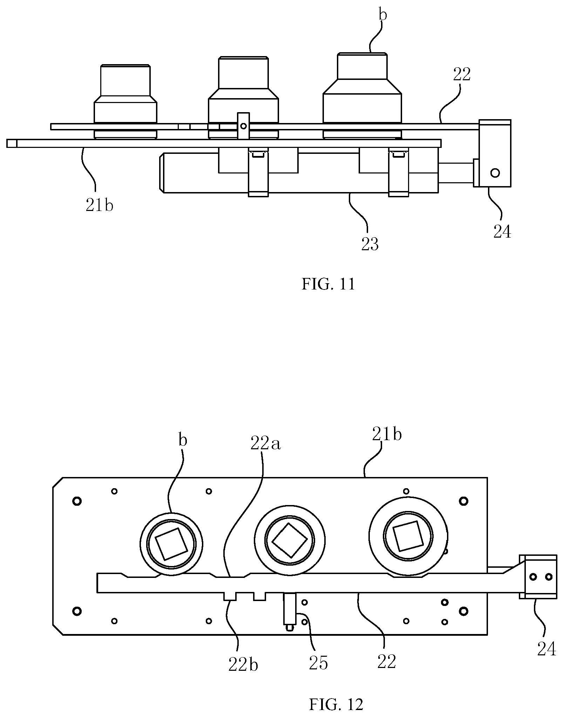

FIGS. 10-15 illustrate a structural schematic view of the auxiliary socket replacement box according to a specific embodiment in which the box body 21 is rectangular. As shown in FIGS. 10-15, the box body 21 includes a housing 21a having a hollow cavity. A horizontal plate-like mounting base plate 21b is provided in the cavity of the housing 21a to separate the cavity of the housing 21a into an upper cavity and a lower cavity. As shown in FIG. 10, three accommodation holes 211 penetrates through a cover of the housing 21a. The three accommodation holes 211 are used for a socket M16, a socket M18 and a socket M20, respectively. Each socket is recessed with a locating groove b1 in an outer wall, which is coaxial with the socket. A linear guiding cavity is formed within the housing 21a communicating with the accommodation holes 211 in the upper cavity. An unlocking pull rod 22 is movable in the guiding cavity. A portion of the unlocking pull rod 22 extending into the accommodation holes 211 is formed with right-angled serrated protrusions on one side, that is, limiting protrusions, as shown in FIG. 12 and FIGS. 14-15. In other words, the portion of the unlocking pull rod 22 extending into the accommodation holes 211 is formed with recessed arc avoidance notches 22a on one side, each with a shape of isosceles trapezoidal, as shown in FIG. 12 and FIGS. 14-15. The limiting protrusions are provided between adjacent ones of the arc avoidance notches 22a. An end (namely a power end) of the unlocking pull rod 22 outside the accommodation hole 211 and a telescopic shaft of a power source 23 are fixed through a connecting member 24. The power source 23 is an electric push rod. The electric push rod is fixed to a bottom surface of the mounting base plate 21b. With the output of the electric push rod, the unlocking pull rod 22 moves horizontally under the driving of a horizontal movement of the telescopic shaft.

As shown in FIG. 12, the other side of unlocking pull rod 22 is equidistantly provided with three protruding right-angled serrations, forming sensing points 22b. The three protruding sensing points 22b can contact a photoelectric switch 25. When the electric push rod stops outputting, the unlocking pull rod 22 stops. The current position of the unlocking pull rod 22 can be determined through matching the photoelectric switch 25 with the sensing points 22b.

When the electric push rod is retracted to the minimum position, the one side of the unlocking pull rod 22 is clamped in the locating grooves b1 of the sockets to prevent the sockets from moving.

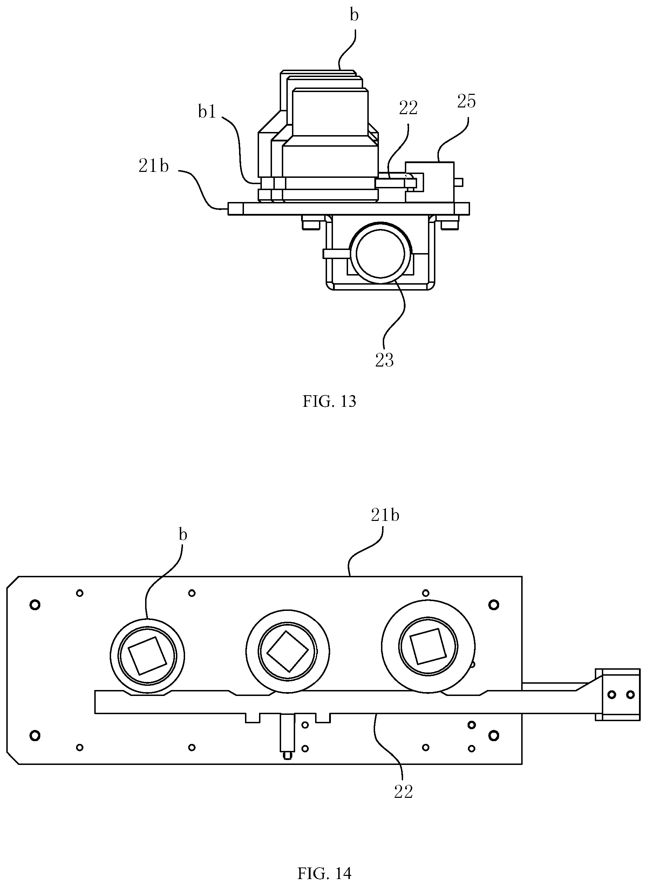

As shown in FIGS. 11-13, when the unlocking pull rod 22 stops first, the socket M20 is aligned with the rightmost arc avoidance notch 22a of the unlocking pull rod 22. The unlocking pull rod 22 does not limit the socket M20, and the socket M20 can be taken out. The remaining two sockets are each aligned with straight edges of the unlocking pull rod 22, or the limiting protrusions. Similarly, as shown in FIGS. 14-15, the socket M16 and the socket M18 can be unlocked sequentially. Only one socket can be unlocked and taken out at the same time.

When it is necessary to retighten a bolt, a needed socket b is unlocked first as required. The working head 12 of the extension arm 11 is aligned to the detaching hole b2 in the rear of the socket b, and pushed into the detaching hole b2 while rotating slowly. The working head 12 is provided with an eject pin 12c at the side wall, and a wall of the detaching hole b2 is formed with a hole. Once the eject pin 12c is inserted into the hole, the working head 12 stops rotating. Under the driving of the extension arm 11, the working head 12 carries the present socket b to leave away the corresponding accommodation hole 211 of the box body 21 for further operation.

When a socket is put back after use, the extension arm drives the working head, such that the socket on the working head is aligned to the corresponding accommodation hole 211 of the box body 21. The unlocking pull rod 22 moves, until the corresponding arc avoidance notch 22a is aligned with the corresponding accommodation hole 211, so that the storage path is accessible. Once the socket is put into the corresponding accommodation hole 211 along the storage path, the unlocking pull rod 22 moves until the corresponding accommodation hole 211 is locked again.

Certainly, for those skilled in the art, The embodiments should be regarded as exemplary and non-limiting in every respect, and the scope of the present disclosure is defined by the appended claims rather than the above description. Therefore, all changes falling within the meaning and scope of equivalent elements of the claims should be included in the present disclosure. The reference numerals in the claims should not be considered as limiting the involved claims.

It should be understood that although this specification is described in accordance with the embodiments, not every embodiment includes only an independent technical solution. Such a description is merely for the sake of clarity, and those skilled in the art should take the specification as a whole. The technical solutions in the embodiments can also be appropriately combined to form other implementations which are comprehensible for those skilled in the art.

All techniques, shapes, and structures not described in detail in the present disclosure are well known in the art.

## Claims

1. A bolt retightening device for bolts on a main angle steel material of an electric angle steel tower, comprising an extension arm (11) and a working head (12) fixed to the extension arm (11), whereby the extension arm (11) comprises a bottom frame (111) fixed to a head end of a main machine (30), a head end of the bottom frame (111) is mounted with a rotation assembly (112) for driving the working head (12) to rotate and a plane displacement assembly for driving the working head (12) to perform a specified point operation, and the bottom frame (111), the rotation assembly (112), the plane displacement assembly and the working head (12) are assembled sequentially;
the rotation assembly (112) comprises a rotating base (112a) rotatably arranged on the bottom frame (111), and a rotation axis of the rotating base (112a) is perpendicular to a length direction of the main angle steel material; the rotation axis is located on a symmetry plane of the main angle steel material, on which a ridge of the main angle steel material is also located; and the rotating base (112a) is driven by a rotary power source to perform a specific action;
the plane displacement assembly comprises an X-axis displacement mechanism (113) and a Y-axis displacement mechanism (114) whose displacement directions are perpendicular to each other; the X-axis displacement mechanism (113) comprises an X-axis frame (113a) and an X-axis movable component (113b) capable of reciprocating linearly along a length direction of the X-axis frame (113a), a reciprocating direction of the X-axis movable component (113b) is formed into an included angle of 45° with the rotation axis of the rotating seat (112a), and an opening of the included angle faces toward a direction where the main angle steel material is located; the Y-axis displacement mechanism (114) comprises a Y-axis frame (114a) and a Y-axis movable component (114b) capable of reciprocating linearly along a length direction of the Y-axis frame (114a), and the Y-axis frame (114a) is fixedly connected with the X-axis movable component (113b); and
the working head (12) comprises a striking seat (12a), and a striking anchor rod (12b) provided at a head end of the striking seat (12a) and configured to locate and rotate a socket, an outer contour of a head end of the striking anchor rod (12b) corresponds to an outer contour of a preset detaching hole of the socket, and the head end of the striking anchor rod (12b) is in a removable flexible snap or threaded fit with the detaching hole; the striking seat (12a) is fixed to the Y-axis movable component (114b), and a striking motor (12d) is provided in the striking seat (12a), so that the striking anchor rod (12b) is driven to rotate around an axis of the socket.

2. The bolt retightening device according to the previous claim, whereby the head end of the striking anchor rod (12b) has a shape of tetragonal prism corresponding to the outer contour of the detaching hole, a locating pin hole is recessed in a side wall of the head end of the striking anchor rod (12b), and the locating pin hole is provided therein with an eject pin (12c) which is capable of extending or retracting flexibly along a radial direction of the striking anchor rod (12b), so that the eject pin (12c) is in a removable snap fit with a hole in a wall of the detaching hole.

3. The bolt retightening device according to the previous claim, whereby an X-axis screw rod (113c) is rotatably provided on the X-axis frame (113a), and the X-axis screw rod (113c) is provided with the X-axis movable component (113b) in a screw-thread fit; a Y-axis screw rod (114c) is rotatably provided on the Y-axis frame (114a), and the Y-axis screw rod (114c) is provided with the Y-axis movable component (114b) in a screw-thread fit; and the X-axis screw rod (113c) and the Y-axis screw rod (114c) each are driven by a synchronous motor (115) to rotate respectively.

4. The bolt retightening device according to claim 2, whereby the rotary power source is a rotating motor (112b); and the rotating base (112a) is rotatably provided on a locating support of the bottom frame (111), and cooperated with a worm at an output shaft of the rotating motor (112b) through a worm gear for power transmission.

5. A climbing robot, comprising the bolt retightening device according to any one of the previous claims, as well as the main machine (30) and a walking unit (40) driven by the main machine (30) to move up and down along the main angle steel material, whereby the main machine (30) is further provided with an auxiliary socket replacement box which cooperates with the working head (12) for a high-altitude socket replacement operation , and the auxiliary socket replacement box and the bolt retightening device are fixed to a head end of the main machine (30); the auxiliary socket replacement box comprises a box body (21) which is provided with accommodation holes (211) into which respective sockets are put, and there are two or more of the accommodation holes (211) that are arranged sequentially along a given direction; the auxiliary socket replacement box further comprises an unlocking pull rod (22) having a length direction parallel to radial directions of the accommodation holes (211), the box body (21) is provided at a side of the accommodation holes (211) with a guiding track or a guiding cavity communicating with the accommodation holes (211), and the unlocking pull rod (22) is located in the guiding cavity or on the guiding track and thus reciprocates along an arrangement direction of the accommodation holes (211); the auxiliary socket replacement box further comprises a power source (23) for driving the unlocking pull rod (22) to reciprocate along the arrangement direction of the accommodation holes (211), a side of the unlocking pull rod (22) facing toward cavities of the accommodation holes (211) is convexly provided with limiting protrusions, and the limiting protrusions are extended into the cavities of the accommodation holes (211) and are in a spigot fit with preset locating grooves of the sockets to prevent the sockets from moving upward; and when the unlocking pull rod (22) reciprocates, only one of the limiting bumps and the corresponding locating groove are separated from each other at the same time, thereby unlocking the socket corresponding to the locating groove.

6. The climbing robot according to the previous claim, whereby the box body (21) is of a rectangular shape, the accommodation holes (211) are arranged sequentially and uniformly along a length direction of the box body (21), the unlocking pull rod (22) is a rectangular rod and is intersected with the cavities of the accommodation holes (211), and the unlocking pull rod (22) is provided with arc avoidance notches (22a) corresponding to the sockets for allowing the sockets to move upward; and along the length direction of the unlocking pull rod (22), areas between adjacent ones of the arc avoidance notches (22a) are formed into the limiting protrusions, and widths of the respective limiting protrusions are increased sequentially or decreased sequentially, so as to ensure that only one of the limiting protrusions and the corresponding locating groove are separated from each other at the same time.

7. The climbing robot according to the previous claim, whereby the box body (21) comprises a rectangular box-like housing (21a) and a mounting base plate (21b) in the housing (21a), the mounting base plate (21b) is arranged horizontally to separate a cavity of the housing (21a) into an upper cavity and a lower cavity, a cover of the housing (21a) is provided with mounting holes penetrating through the cover of the housing (21a), walls of the mounting holes serve as walls of the accommodation holes (211), and an upper surface of the mounting base plate (21b) serves as a bottom of each of the accommodation holes (211), such that the accommodation holes (211) are finally formed as counterbored holes; and the unlocking pull rod (22) is extended inside the upper cavity, and is in a spigot fit with the sockets in the respective accommodation holes (211).

8. The climbing robot according to the previous claim, whereby the power source (23) is an electric push rod, the power source (23) is fixed to a lower surface of the mounting base plate (21b), and a telescopic shaft of the power source (23) and a power end of the unlocking pull rod (22) are fixedly connected with each other through a connecting member (24).

9. The climbing robot according to claim 5, whereby the box body (21) is of a cylindrical shape, the accommodation holes (211) are arranged sequentially and uniformly along a circumferential direction of the box body (21), the unlocking pull rod (22) is a C-shaped rod or a circular rod and is intersected with the cavities of the accommodation holes (211), and an inner side of the unlocking pull rod (22) is provided with arc avoidance notches (22a) corresponding to the sockets for allowing the sockets to move upward; and along the circumferential direction of the unlocking pull rod (22), areas between adjacent ones of the arc avoidance notches (22a) are formed into the limiting protrusions, and widths of the respective limiting protrusions are increased sequentially or decreased sequentially, so as to ensure that only one of the limiting protrusions and the corresponding locating groove are separated from each other at the same time.

10. The climbing robot according to claim 5, whereby the unlocking pull rod (22) is provided with sensing points (22b), a number of the sensing points (22b) corresponds to a number of the sockets, and a distance between the sensing points (22b) is the same as that between adjacent ones of the sockets; and a photoelectric switch (25) for monitoring positions of the sensing points (22b) is provided in the box body (21), and a sensing surface of the photoelectric switch (25) is located on a displacement path of the sensing points (22b).

## Patentansprüche

1. Bolzenrückzugsvorrichtung für Bolzen auf einem Hauptwinkelstahlmaterial eines elektrischen Winkelstahlturms, umfassend einen Verlängerungsarm (11) und einen Arbeitskopf (12), der an dem Verlängerungsarm (11) befestigt ist, wobei der Verlängerungsarm (11) einen unteren Rahmen (111) umfasst, der an einem Kopfende einer Hauptmaschine (30) befestigt ist, ein Kopfende des unteren Rahmens (111) mit einer Drehbaugruppe (112) zum Antreiben des Arbeitskopfes (12), um sich zu drehen, und einer Ebenenverschiebungsbaugruppe zum Antreiben des Arbeitskopfes (12), um einen spezifischen Punktvorgang durchzuführen, montiert ist, und der untere Rahmen (111), die Drehbaugruppe (112), die Ebenenverschiebungsbaugruppe und der Arbeitskopf (12) nacheinander zusammengebaut werden;
die Drehbaugruppe (112) eine Drehbasis (112a) umfasst, die drehbar auf dem unteren Rahmen (111) angeordnet ist, und eine Drehachse der Drehbasis (112a) senkrecht zu einer Längenrichtung des Hauptwinkelstahlmaterials ist; sich die Drehachse auf einer Symmetrieebene des Hauptwinkelstahlmaterials befindet, auf der sich außerdem eine Erhöhung des Hauptwinkelstahlmaterials befindet; und die Drehbasis (112a) von einer Drehkraftquelle angetrieben wird, um eine spezifische Handlung auszuführen;
die Ebenenverschiebungsbaugruppe einen X-Achsen-Verschiebungsmechanismus (113) und einen Y-Achsen-Verschiebungsmechanismus (114) umfasst, deren Verschiebungsrichtungen senkrecht zueinander sind; der X-Achsen-Verschiebungsmechanismus (113) einen X-Achsen-Rahmen (113a) und eine bewegliche Komponente (113b) der X-Achse, die in der Lage ist, sich entlang einer Längenrichtung des X-Achsen-Rahmens (113a) hin- und herzubewegen, umfasst, eine Hin- und Herbewegungsrichtung der beweglichen Komponente (113b) der X-Achse zu einem Öffnungswinkel von 45° zu der Drehachse des Drehsitzes (112a) gebildet ist und eine Öffnung des Öffnungswinkels einer Richtung zugewandt ist, in der sich das Hauptwinkelstahlmaterial befindet; der Y-Achsen-Verschiebungsmechanismus (114) einen Y-Achsen-Rahmen (114a) und eine bewegliche Komponente (114b) der Y-Achse, die in der Lage ist, sich linear entlang einer Längenrichtung des Y-Achsen-Rahmens (114a) hin- und herzubewegen, umfasst und der Y-Achsen-Rahmen (114a) fest mit der beweglichen Komponente (113b) der X-Achse verbunden ist; und
der Arbeitskopf (12) einen Schlagsitz (12a) und eine Schlagankerstange (12b), die an einem Kopfende des Schlagsitzes (12a) bereitgestellt ist und dazu konfiguriert ist, einen Sockel zu positionieren und zu drehen, umfasst, eine äußere Kontur eines Kopfendes der Schlagankerstange (12b) einer äußeren Kontur eines voreingestellten Trennlochs des Sockels entspricht und sich das Kopfende der Schlagankerstange (12b) in einem entfernbaren flexiblen Schnapp- oder Gewindesitz mit dem Trennloch befindet; der Schlagsitz (12a) an der beweglichen Komponente (114b) der Y-Achse befestigt ist und ein Schlagmotor (12d) in dem Schlagsitz (12a) bereitgestellt ist, sodass die Schlagankerstange (12b) angetrieben wird, um sich um eine Achse des Sockels zu drehen.

2. Bolzenrückzugsvorrichtung nach dem vorhergehenden Anspruch, wobei das Kopfende der Schlagankerstange (12b) eine Form eines vierkantigen Prismas aufweist, das der äußeren Kontur des Trennlochs entspricht, ein Positionierstiftloch in einer Seitenwand des Kopfendes der Schlagankerstange (12b) vertieft ist und das Positionierstiftloch darin mit einem Auswurfstift (12c) versehen ist, der in der Lage ist, flexibel entlang einer radialen Richtung der Schlagankerstange (12b) auszufahren oder einzufahren, sodass sich der Auswurfstift (12c) in einem entfernbaren Schnappsitz mit einem Loch in einer Wand des Trennlochs befindet.

3. Bolzenrückzugsvorrichtung nach dem vorhergehenden Anspruch, wobei eine X-Achsen-Gewindestange (113c) drehbar auf dem X-Achsen-Rahmen (113a) bereitgestellt ist und die X-Achsen-Gewindestange (113c) mit der beweglichen Komponente (113b) der X-Achse in einem Schraubgewindesitz versehen ist; eine Y-Achsen-Gewindestange (114c) drehbar auf dem Y-Achsen-Rahmen (114a) bereitgestellt ist und die Y-Achsen-Gewindestange (114c) mit der beweglichen Komponente (114b) der Y-Achse in einem Schraubgewindesitz versehen ist; und die X-Achsen-Gewindestange (113c) und die Y-Achsen-Gewindestange (114c)jeweils von einem Synchronmotor (115) angetrieben werden, um sich jeweils zu drehen.

4. Bolzenrückzugsvorrichtung nach Anspruch 2, wobei die Drehkraftquelle ein Drehmotor (112b) ist; und die Drehbasis (112a) drehbar auf einer Positionierstütze des unteren Rahmens (111) bereitgestellt ist und mit einem Schneckengewinde an einer Ausgangswelle des Drehmotors (112b) durch ein Schneckengetriebe zur Kraftübertragung zusammenwirkt.

5. Kletterroboter, umfassend die Bolzenrückzugsvorrichtung nach einem der vorhergehenden Ansprüche sowie die Hauptmaschine (30) und eine Geheinheit (40), die von der Hauptmaschine (30) angetrieben wird, um sich entlang des Hauptwinkelstahlmaterials nach oben und unten zu bewegen, wobei die Hauptmaschine (30) ferner mit einem Hilfssockelaustauschkasten versehen ist, der für einen Sockelaustauschvorgang in großer Höhe mit dem Arbeitskopf (12) zusammenwirkt, und der Hilfssockelaustauschkasten und die Bolzenrückzugsvorrichtung an einem Kopfende der Hauptmaschine (30) befestigt sind; der Hilfssockelaustauschkasten einen Kastenkörper (21) umfasst, der mit Aufnahmelöchern (211) versehen ist, in die jeweilige Sockel gesetzt werden, und es zwei oder mehr der Aufnahmelöcher (211) gibt, die entlang einer bestimmten Richtung nacheinander angeordnet sind; der Hilfssockelaustauschkasten ferner eine Entriegelungszugstange (22) mit einer Längenrichtung parallel zu radialen Richtungen der Aufnahmelöcher (211) umfasst, der Kastenkörper (21) an einer Seite der Aufnahmelöcher (211) mit einer Führungsbahn oder einem Führungshohlraum, die/der mit den Aufnahmelöchern (211) in Verbindung steht, versehen ist und sich die Entriegelungszugstange (22) in dem Führungshohlraum oder auf der Führungsbahn befindet und sich somit entlang einer Anordnungsrichtung der Aufnahmelöcher (211) hin- und herbewegt; der Hilfssockelaustauschkasten ferner eine Kraftquelle (23) zum Antreiben der Entriegelungszugstange (22) umfasst, um sich entlang der Anordnungsrichtung der Aufnahmelöcher (211) hin- und herzubewegen, eine Seite der Entriegelungszugstange (22), die Hohlräumen der Aufnahmelöcher (211) zugewandt ist, konvex mit Begrenzungsvorsprüngen versehen ist und die Begrenzungsvorsprünge in die Hohlräume der Aufnahmelöcher (211) ausgefahren werden und in einem Zapfensitz mit voreingestellten Positioniernuten der Sockel sind, um zu verhindern, dass sich die Sockel nach oben bewegen; und wenn sich die Entriegelungszugstange (22) hin- und herbewegt, nur einer der Begrenzungsstege und die entsprechende Positioniernut gleichzeitig voneinander getrennt werden, wodurch der Sockel entsprechend der Positioniernut entriegelt wird.

6. Kletterroboter nach dem vorhergehenden Anspruch, wobei der Kastenkörper (21) eine rechteckige Form aufweist, die Aufnahmelöcher (211) nacheinander und gleichmäßig entlang einer Längenrichtung des Kastenkörpers (21) angeordnet sind, die Entriegelungszugstange (22) eine rechteckige Stange ist und die Hohlräume der Aufnahmelöcher (211) schneidet und die Entriegelungszugstange (22) mit Lichtbogenvermeidungskerben (22a) entsprechend den Sockeln versehen ist, um zu ermöglichen, dass sich die Sockel nach oben bewegen; und entlang der Längenrichtung der Entriegelungszugstange (22) Bereiche zwischen benachbarten der Lichtbogenvermeidungskerben (22a) zu den Begrenzungsvorsprüngen gebildet werden und Breiten der jeweiligen Begrenzungsvorsprünge nacheinander erhöht oder nacheinander verringert werden, um sicherzustellen, dass nur einer der Begrenzungsvorsprünge und die entsprechende Positioniernut gleichzeitig voneinander getrennt werden.

7. Kletterroboter nach dem vorhergehenden Anspruch, wobei der Kastenkörper (21) ein rechteckiges kastenartiges Gehäuse (21a) und eine Montagebasisplatte (21b) in dem Gehäuse (21a) umfasst, die Montagebasisplatte (21b) horizontal angeordnet ist, um einen Hohlraum des Gehäuses (21a) in einen oberen Hohlraum und einen unteren Hohlraum zu trennen, eine Abdeckung des Gehäuses (21a) mit Montagelöchern versehen ist, die durch die Abdeckung des Gehäuses (21a) verlaufen, Wände der Montagelöcher als Wände der Aufnahmelöcher (211) dienen und eine obere Fläche der Montagebasisplatte (21b) als eine Unterseite jedes der Aufnahmelöcher (211) dient, sodass die Aufnahmelöcher (211) letztendlich als gesenkte Löcher gebildet sind; und die Entriegelungszugstange (22) innerhalb des oberen Hohlraums ausgefahren ist und sich in einem Zapfensitz mit den Sockeln in den jeweiligen Aufnahmelöchern (211) befindet.

8. Kletterroboter nach dem vorhergehenden Anspruch, wobei die Kraftquelle (23) eine elektrische Schubstange ist, die Kraftquelle (23) an einer unteren Fläche der Montagebasisplatte (21b) befestigt ist und eine Teleskopwelle der Kraftquelle (23) und ein Kraftende der Entriegelungszugstange (22) durch ein Verbindungselement (24) fest miteinander verbunden sind.

9. Kletterroboter nach Anspruch 5, wobei der Kastenkörper (21) eine zylindrische Form aufweist, die Aufnahmelöcher (211) nacheinander und gleichmäßig entlang einer Umfangsrichtung des Kastenkörpers (21) angeordnet sind, die Entriegelungszugstange (22) eine C-förmige Stange oder eine kreisförmige Stange ist und die Hohlräume der Aufnahmelöcher (211) schneidet und eine Innenseite der Entriegelungszugstange (22) mit Lichtbogenvermeidungskerben (22a) entsprechend den Sockeln versehen ist, um zu ermöglichen, dass sich die Sockel nach oben bewegen; und entlang der Umfangsrichtung der Entriegelungszugstange (22) Bereiche zwischen benachbarten der Lichtbogenvermeidungskerben (22a) zu den Begrenzungsvorsprüngen gebildet werden und Breiten der jeweiligen Begrenzungsvorsprünge nacheinander erhöht oder nacheinander verringert werden, um sicherzustellen, dass nur einer der Begrenzungsvorsprünge und die entsprechende Positioniernut gleichzeitig voneinander getrennt werden.

10. Kletterroboter nach Anspruch 5, wobei die Entriegelungszugstange (22) mit Messpunkten (22b) versehen ist, eine Anzahl der Messpunkte (22b) einer Anzahl der Sockel entspricht und ein Abstand zwischen den Messpunkten (22b) der gleiche wie der zwischen benachbarten der Sockel ist; und ein photoelektrischer Schalter (25) zum Überwachen von Positionen der Messpunkte (22b) in dem Kastenkörper (21) bereitgestellt ist und sich eine Messoberfläche des photoelektrischen Schalters (25) auf einem Verschiebungspfad der Messpunkte (22b) befindet.

## Revendications

1. Dispositif de resserrage de boulons pour des boulons sur un matériel principal de cornière d'acier d'un pylône électrique en cornière d'acier, comprenant un bras d'extension (11) et une tête de travail (12) fixée au bras d'extension (11), moyennant quoi le bras d'extension (11) comprend un cadre inférieur (111) fixé à une extrémité de tête d'une machine principale (30), une extrémité de tête du cadre inférieur (111) est montée avec un ensemble rotation (112) pour entraîner la tête de travail (12) à tourner et un ensemble déplacement dans le plan pour entraîner la tête de travail (12) à réaliser une opération au point spécifié, et le cadre inférieur (111), l'ensemble rotation (112), l'ensemble déplacement dans le plan et la tête de travail (12) sont assemblés séquentiellement ;
l'ensemble rotation (112) comprend une base rotative (112a) agencée de manière rotative sur le cadre inférieur (111), et un axe de rotation de la base rotative (112a) est perpendiculaire à la direction de la longueur du matériel principal de cornière d'acier ; l'axe de rotation est situé sur un plan de symétrie du matériel principal de cornière d'acier, sur lequel une arête du matériel principal de cornière d'acier est également située ; et la base rotative (112a) est entraînée par une source d'énergie de rotation pour réaliser une action spécifique ;
l'ensemble déplacement dans le plan comprend un mécanisme de déplacement sur l'axe des X (113) et un mécanisme de déplacement sur l'axe des Y (114) dont les directions de déplacement sont perpendiculaires l'une à l'autre ; le mécanisme de déplacement sur l'axe des X (113) comprend un cadre d'axe des X (113a) et un constituant mobile sur l'axe des X (113b) capable d'un mouvement alternatif linéaire le long de la direction de la longueur du cadre d'axe des X (113a), une direction de mouvement alternatif du constituant mobile sur l'axe des X (113b) forme un angle inclus de 45° avec l'axe de rotation du siège rotatif (1 12a), et une ouverture de l'angle inclus est orientée dans une direction où le matériel principal de cornière d'acier est situé ; le mécanisme de déplacement sur l'axe des Y (114) comprend un cadre d'axe des Y (114a) et un constituant mobile sur l'axe des Y (114b) capable d'un mouvement alternatif linéaire le long de la direction de la longueur du cadre d'axe des Y (114a), et le cadre d'axe des Y (114a) est relié de manière fixe au constituant mobile sur l'axe des X (113b) ; et
la tête de travail (12) comprend un siège de percussion (12a), et une tige d'ancrage de percussion (12b) pourvue au niveau d'une extrémité de tête du siège de percussion (12a) et conçue pour localiser et faire tourner une douille, un contour externe d'une extrémité de tête de la tige d'ancrage de percussion (12b) correspond à un contour externe d'un orifice de séparation prédéfini de la douille, et l'extrémité de tête de la tige d'ancrage de percussion (12b) est en liaison filetée ou par encliquetage flexible amovible avec l'orifice de séparation ; le siège de percussion (12a) est fixé au constituant mobile sur l'axe des Y (114b), et un moteur de percussion (12d) est pourvu dans le siège de percussion (12a), de telle sorte que la tige d'ancrage de percussion (12b) est entraînée à tourner autour d'un axe de la douille.

2. Dispositif de resserrage de boulons selon la revendication précédente, moyennant quoi l'extrémité de tête de la tige d'ancrage de percussion (12b) a la forme d'un prisme tétraédrique correspondant au contour externe de l'orifice de séparation, un orifice d'ergot de positionnement est renfoncé dans une paroi latérale de l'extrémité de tête de la tige d'ancrage de percussion (12b), et l'orifice d'ergot de positionnement est pourvu dans celle-ci avec un ergot d'éjection (12c) qui est capable de s'étendre ou de se rétracter de manière flexible le long d'une direction radiale de la tige d'ancrage de percussion (12b), de telle sorte que l'ergot d'éjection (12c) est dans une liaison par encliquetage amovible avec un orifice dans une paroi de l'orifice de séparation.

3. Dispositif de resserrage de boulons selon la revendication précédente, moyennant quoi une tige filetée sur l'axe des X (113c) est pourvue de manière rotative sur le cadre d'axe des X (113a), et la tige filetée sur l'axe des X (113c) est pourvue avec le constituant mobile sur l'axe des X (113b) dans une liaison vissée par filetage ; une tige filetée sur l'axe des Y (114c) est pourvue de manière rotative sur le cadre d'axe des Y (114a), et la tige filetée sur l'axe des Y (114c) est pourvue avec le constituant mobile sur l'axe des Y (114b) dans une liaison vissée par filetage ; et la tige filetée sur l'axe des X (113c) et la tige filetée sur l'axe des Y (114c) sont chacune entraînées par un moteur synchrone (115) pour tourner respectivement.

4. Dispositif de resserrage de boulons selon la revendication 2, moyennant quoi la source d'énergie de rotation est un moteur rotatif (112b) ; et la base rotative (112a) est pourvue de manière rotative sur un support de positionnement du cadre inférieur (111), et coopère avec une vis sans fin au niveau d'un arbre de sortie du moteur rotatif (112b) à travers un engrenage à vis sans fin pour transmission de puissance.

5. Robot grimpeur, comprenant le dispositif de resserrage de boulons selon l'une quelconque des revendications précédentes, ainsi que la machine principale (30) et une unité de marche (40) entraînée par la machine principale (30) pour monter et descendre le long du matériel principal de cornière d'acier ; moyennant quoi la machine principale (30) est en outre pourvue d'un boîtier de remplacement de douilles auxiliaire qui coopère avec la tête de travail (12) pour une opération de remplacement de douille à altitude élevée, et le boîtier de remplacement de douilles auxiliaire et le dispositif de resserrage de boulons sont fixés à une extrémité de tête de la machine principale (30) ; le boîtier de remplacement de douilles auxiliaire comprend un corps de boîtier (21) qui est pourvu d'orifices d'accueil (211) dans lesquels les douilles respectives sont placées, et deux ou plus des orifices d'accueil (211) sont agencés séquentiellement le long d'une direction donnée ; le boîtier de remplacement de douilles auxiliaire comprend en outre une tige de traction de déverrouillage (22) dont la direction de la longueur est parallèle aux directions radiales des orifices d'accueil (211), le corps de boîtier (21) est pourvu au niveau d'un côté des orifices d'accueil (211) avec un rail de guidage ou une cavité de guidage communiquant avec les orifices d'accueil (211), et la tige de traction de déverrouillage (22) est située dans la cavité de guidage ou sur le rail de guidage et fait ainsi un mouvement alternatif le long d'une direction d'agencement des orifices d'accueil (211) ; le boîtier de remplacement de douilles auxiliaire comprend en outre une source d'énergie (23) pour entraîner la tige de traction de déverrouillage (22) dans un mouvement alternatif le long de la direction d'agencement des orifices d'accueil (211), un côté de la tige de traction de déverrouillage (22) orienté vers les cavités des orifices d'accueil (211) est pourvu de manière convexe de saillies de limitation, et les saillies de limitation s'étendent dans les cavités des orifices d'accueil (211) et sont dans une liaison par tenon avec des rainures de positionnement prédéfinies des douilles pour empêcher les douilles de se déplacer vers le haut ; et lorsque la tige de traction de déverrouillage (22) fait un mouvement alternatif, seul l'un des bourrelets de limitation et la rainure de positionnement correspondante sont séparés l'un de l'autre simultanément, déverrouillant ainsi la douille correspondant à la rainure de positionnement.

6. Robot grimpeur selon la revendication précédente, moyennant quoi le corps de boîtier (21) est de forme rectangulaire, les orifices d'accueil (211) sont agencés séquentiellement et uniformément le long de la direction de la longueur du corps de boîtier (21), la tige de traction de déverrouillage (22) est une tige rectangulaire qui croise les cavités des orifices d'accueil (211), et la tige de traction de déverrouillage (22) est pourvue d'encoches de prévention de courbure (22a) correspondant aux douilles pour permettre aux douilles de se déplacer vers le haut ; et le long de la direction de la longueur de la tige de traction de déverrouillage (22), des zones entre des encoches adjacentes parmi les encoches de prévention de courbure (22a) sont formées dans les saillies de limitation, et les largeurs des saillies de limitation respectives augmentent séquentiellement ou diminuent séquentiellement, de manière à garantir que seule l'une des saillies de limitation et la rainure de positionnement correspondante sont séparées l'une de l'autre simultanément.

7. Robot grimpeur selon la revendication précédente, moyennant quoi le corps de boîtier (21) comprend un logement (21a) de type boîtier rectangulaire et une plaque de base de montage (21b) dans le logement (21a), la plaque de base de montage (21b) est agencée horizontalement pour séparer une cavité du logement (21a) en une cavité supérieure et une cavité inférieure, un capot du logement (21a) est pourvu d'orifices de montage pénétrant à travers le capot du logement (21a), des parois des orifices de montage servent de parois des orifices d'accueil (211), et une surface supérieure de la plaque de base de montage (21b) sert de fond de chacun des orifices d'accueil (211), de telle sorte que les orifices d'accueil (211) sont formés de manière finale en tant qu'orifices lamés ; et la tige de traction de déverrouillage (22) s'étend à l'intérieur de la cavité supérieure, et est dans une liaison par tenon avec les douilles dans les orifices d'accueil (211) respectifs.

8. Robot grimpeur selon la revendication précédente, moyennant quoi la source d'énergie (23) est une tige poussoir électrique, la source d'énergie (23) est fixée à une surface inférieure de la plaque de base de montage (21b), et un arbre télescopique de la source d'énergie (23) et une extrémité alimentée de la tige de traction de déverrouillage (22) sont reliés de manière fixe l'une à l'autre au travers d'un élément de liaison (24).

9. Robot grimpeur selon la revendication 5, moyennant quoi le corps de boîtier (21) est de forme cylindrique, les orifices d'accueil (211) sont agencés séquentiellement et uniformément le long d'une direction circonférentielle du corps de boîtier (21), la tige de traction de déverrouillage (22) est une tige en C ou une tige circulaire et croise les cavités des orifices d'accueil (211), et un côté interne de la tige de traction de déverrouillage (22) est pourvu d'encoches de prévention de courbure (22a) correspondant aux douilles pour permettre aux douilles de se déplacer vers le haut ; et le long de la direction circonférentielle de la tige de traction de déverrouillage (22), des zones entre des encoches adjacentes parmi les encoches de prévention de courbure (22a) sont formées dans les saillies de limitation, et des largeurs des saillies de limitation respectives augmentent séquentiellement ou diminuent séquentiellement, de manière à garantir que seule une des saillies de limitation et la rainure de positionnement correspondante sont séparées l'une de l'autre simultanément.

10. Robot grimpeur selon la revendication 5, moyennant quoi la tige de traction de déverrouillage (22) est pourvue de points de détection (22b), le nombre des points de détection (22b) correspond au nombre de douilles, et une distance entre les points de détection (22b) est identique à celle entre des douilles adjacentes parmi les douilles ; et un commutateur photoélectrique (25) destiné à surveiller les positions des points de détection (22b) est pourvu dans le corps de boîtier (21), et une surface de détection du commutateur photoélectrique (25) est située sur un trajet de déplacement des points de détection (22b).
